# EUROPÄISCHE PATENTSCHRIFT

(11) **EP 0 862 058 B1**
(45) Veröffentlichungstag und Bekanntmachung des Hinweises auf die Patenterteilung: **16.04.2003**
(21) Anmeldenummer: 98101783.3
(22) Anmeldetag: 03.02.1998
(51) Int. Cl.: G01P 1/00, G01P 15/12, G01D 3/032

(54) **Verfahren zur Offsetkorrektur eines Sensorausgangssignals**
Method for offset compensation of a sensor output signal
Procédé de compensation de décalage d'un signal de sortie d'un capteur

(30) Priorität: 28.02.1997 DE 19708115
(43) Veröffentlichungstag der Anmeldung: 02.09.1998
(73) Patentinhaber: Conti Temic microelectronic GmbH, 90411 Nürnberg (DE)
(72) Erfinder: Brinks, Gerald, 88483 Burgrieden (DE); Weinacht, Manfred, 73265 Dettingen/Teck (DE)

(56) Entgegenhaltungen:
- EP-A- 0 758 739
- DE-A- 2 419 914
- DE-A- 3 334 603
- PATENT ABSTRACTS OF JAPAN vol. 006, no. 179 (P-142), 14.September 1982 & JP 57 096214 A (FUJITSU LTD), 15.Juni 1982,

## Beschreibung

**Die Erfindung betrifft** ein Verfahren zur Ansteuerung eines Sensors mit Offsetregelung, wie es im dem Oberbegriff des Patentanspruches 1 im Hinblick auf die DE 33 34 603 als bekannt vorausgesetzt wird.

Solche Verfahren zur Ansteuerung werden zum Beispiel für Beschleunigungsaufnehmer im Kraftfahrzeug für die Auslösung von z.B. Airbags oder Gurtstraffer benötigt. Ein Beschleunigungsaufnehmer erfaßt die Verzögerung des Fahrzeugs, wandelt sie in ein elektrisches Signal um, verstärkt sie und gibt sie an ein Steuergerät weiter, das ein Auslösesignal erzeugt, wenn eine Verzögerungscharakteristik vorliegt, die der eines Aufpralls des Fahrzeugs auf ein Hindernis entspricht. Durch die Auslöseeinrichtung werden Zündkreise elektrisch ausgelöst, die über eine chemische Reaktion entweder das plötzliche Aufblasen des Airbags oder das plötzliche Anspannen von Sicherheitsgurten bewirken. Hierbei unterscheidet man mehrere Arten von Beschleunigungsaufnehmern z.B.: den piezoelektrischen und den piezoresistiven. Beim piezoelektrischen Beschleunigungsaufnehmer entsteht eine Ladung, die als elektrischer Strom abfließt, während beim piezoresistiven mikromechanisch eine elektrische Spannung erzeugt wird.

Solche Verfahren zur Ansteuerung von Beschleunigungsaufnehmern müssen sehr zuverlässig sein, da die Gefahr besteht, daß Fehlauslösungen infolge der Offsetdrift des Sensorsignals über Zeit und Temperatur erfolgen. Bei der Verwendung von billigen Bauteilen, insbesondere von billigen Beschleunigungsaufnehmern ist die Gefahr besonders groß.

Die DE 33 34 603 C2 offenbart ein Verfahren für einen piezoelektrischen Beschleunigungsaufnehmer mit Offsetkompensation bei dem das Ausgangsstromsignal der Verstärkeranordnung in einem Komparator mit einem Referenzwert verglichen wird, wobei der Vergleich in einem festen oder variablen Zeitraum erfolgt und in Abhängigkeit des Ausgangssignals des Komparators der Ausgangsstrom einer Stromquelle im Zeittakt erhöht oder erniedrigt wird und daß dieser Ausgangsstrom einem Verstärkereingang zugeführt wird.

Während des Einschaltvorgangs wird, um definierte Anfangsbedingungen zu schaffen, der Zähler auf einen festgelegten Zahlenwert und der Zeittaktgeber über eine definierte Zeit auf eine höhere Frequenz gesetzt. Dadurch entsteht ein beschleunigter Offsetregelvorgang der Einschaltabweichungen rascher ausregelt.

Nachteilig an diesem Verfahren ist jedoch, daß damit nur piezoelektrische also stromgesteuerte Anordnungen angesteuert werden können. Ein weiterer Nachteil ergibt sich daraus, daß in dem Moment indem der Einschaltvorgang beendet wird, das heißt, wenn von der höheren Frequenz, die während des Einschaltvorgangs benötigt wird, auf die wesentlich niedrigere Betriebsfrequenz geschaltet wird ein Crashfall mit diesem Verfahren nicht erfaßt werden kann oder daß es eventuell, zur einer Fehlauslösung kommen kann. Ein zuverlässiger Schutz über den gesamten Zeitraum ist für die Insassen eines Kraftfahrzeuges nicht gewährleistet.

**Der Erfindung liegt daher die Aufgabe zugrunde** ein Verfahren aufzuzeigen bei dem auch bei einfachen und billigen Sensoren, wie z.B. spannungserzeugende, piezoresistive, mikromechanische Beschleunigungsaufnehmern, eine Offsetdrift am Ausgang des Sensormoduls vermieden werden kann und bei dem die Zuverlässigkeit zu jedem Zeitpunkt, insbesondere beim Einschaltvorgang und unter allen Betriebsbedingungen gewährleistet werden kann.

**Diese Aufgabe wird erfindungsgemäß durch die Merkmale im Kennzeichen des Patentanspruchs 1 gelöst.** Bei diesem Verfahren wird in der Ansteuerung, die einen spannungserzeugenden Sensor enthält, das Vorzeichen und der Betrag der zwischen der elektrischen Spannung am Ausgang der Ansteuerung und der Referenzspannung mit einer festen oder variablen Betriebsfrequenz erfaßt, wobei das Vorzeichen die Spannung am Ausgang der Ansteuerschaltung verändert und der Betrag der Differenz die Betriebsfrequenz für diese Regelung bestimmt. Vorteilhafte Weiterbildungen der Erfindung ergeben sich aus den Unteransprüchen, bei denen beispielsweise die Frequenz während des Einschaltvorgangs wesentlich erhöht und dann stufenweise bis zur Betriebsfrequenz verkleinert wird.

**Die mit der Erfindung erzielten Vorteile** bestehen darin, daß die untere Betriebsfrequenz nahezu beliebig niedrig wählbar ist, somit die Vorteile einer AC-Kopplung und einer DC-Kopplung vereint sind, und der Einschaltvorgang sehr schnell und sehr zuverlässig vonstatten geht. Bei diesem Verfahren zur Ansteuerung werden keine externen Bauteile benötigt, da alle Funktionen integrierbar sind. Weiterhin ist kein aktiver Abgleich des Offsets bei Raumtemperatur bzw. über den zulässigen Temperaturbereich mehr nötig. Die Ausgangsruhespannung kann mit sehr hoher Genauigkeit auf einen gewünschten Wert eingestellt werden und ist unabhängig von sich ändernden Eingangsgrößen (z.B. Temperatur) und von Offsetfehlern, die von dem Sensorelement oder der Signalverarbeitung verursacht werden. Auch wird die eingestellte Empfindlichkeit durch diese Ansteuerung nicht beeinflußt. Ein weiterer Vorteil eines solchen Verfahrens ist es, daß Sensorelemente mit einer größeren Toleranz des Offsets verwendet werden können, dies führt bei der Herstellung von derartigen Beschleunigungssensoren zu einer höheren Ausbeute und somit zu einem günstigeren Preis.

Im folgenden soll die Erfindung anhand von **Ausführungsbeispielen** in Zusammenhang mit den Zeichnungen dargestellt werden.
- **Figur 1:**: Darstellung des erfindungsgemäßen Verfahrens
- **Figur 2:**: Vergleich zwischen den Einschwingzeiten mit und ohne Einschaltregelung
- **Figur 3:**: Frequenzverlauf beim Einschaltvorgang

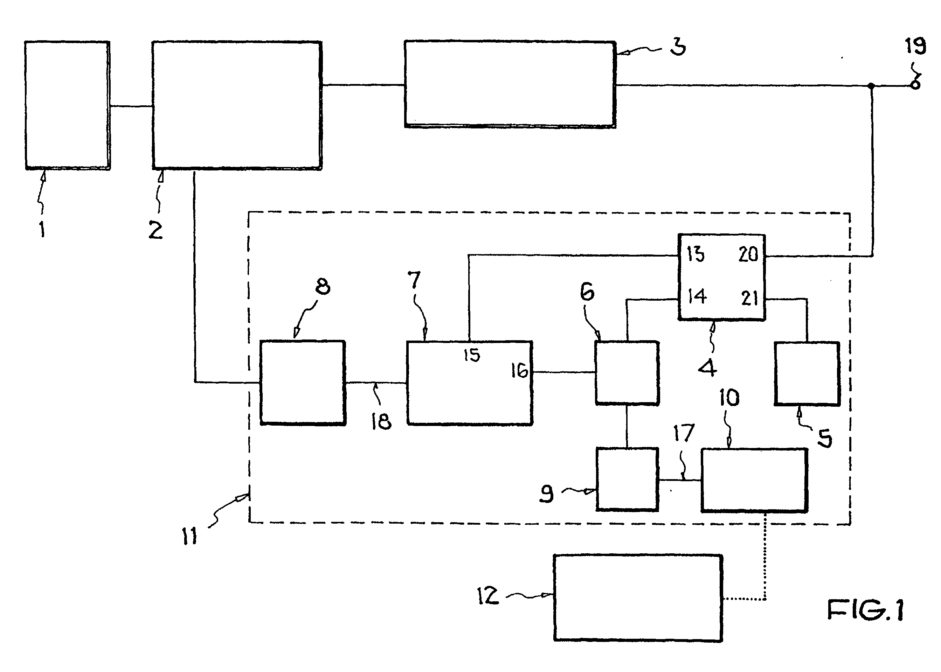

**Figur 1** zeigt das erfindungsgemäße Verfahren anhand eines Ausführungsbeispiels. Der Sensor **1**, z.B. ein mikromechanischer, piezoresistiver Beschleunigungsaufnehmer erzeugt ein elektrisches Spannungssignal. Dieses Spannungssignal wird durch eine Beschleunigung verursacht und wird im folgenden als Beschleunigungsspannung bezeichnet. Von der Höhe und dem zeitlichen Verlauf dieser Beschleunigungsspannung können Rückschlüsse auf die aufgetretenen Beschleunigungen gezogen werden. Diese Beschleunigungsspannung wird in einer Verstärkereinheit **2** vergrößert und zusammen mit einer Bezugsspannung dem Grundsignal, also dem definierten statistischen Nullpunkt des Systems über eine entsprechende Signalverarbeitung **3** aufbereitet. Die daraus resultierende Spannung kann von einer Offsetspannung überlagert werden, die aufgrund von Herstelltoleranzen, Umwelteinflüssen, Betriebsbedingungen und zufallsbedingten Faktoren entsteht. Aus diesem Grund ist auch die Spannung am Ausgang **19** der Ansteuerung, die sich aus der Beschleunigungsspannung, der Bezugsspannung und der Offsetspannung zusammensetzt, verfälscht. Beim Anwendungsbeispiel wird der Istwert **20** dieser Spannung am Ausgang **19** abgegriffen und an einen Komparator **4** geführt. Hier wird der Istwert (Spannung am Ausgang der Ansteuerung) **20** mit dem Sollwert (Referenzspannung) **21** aus einer Referenzspannungsquelle **5** verglichen. Im Komparator **4** wird bei diesem Vergleich zum einen das Vorzeichen der Differenz **13** und der Betrag der Differenz **14** ermittelt. Mit dem Differenzbetrag **14** wird ein spannungsgesteuerter Oszillator **6** betrieben. Dieser erzeugt, abhängig vom Betrag der Spannungsdifferenz zwischen Ist- und Sollwert, die Taktfrequenz **16** für einen Vorwärts/Rückwärtszähler **7.** Je größer die Differenz zwischen Istwert und Sollwert ist, desto höher ist die Frequenz. Mit dem Vorzeichen **13,** welches vom Komparator **4** ermittelt wurde, wird direkt der Zählbetrieb **15** des Vorwärts/Rückwärtszählers **7** angesteuert. Hier wird, je nach Vorzeichen, dessen Zählerstellung um eins erhöht oder um eins erniedrigt. Der Ausgang des Vorwärts/Rückwärtszählers ist eine n-Bit parallele Datenleitung **18.** Diese ist mit einem n-Bit Digital/Analogwandler **8** verbunden. Dieser wandelt das Signal aus dem Vorwärts/Rückwärtszähler in eine analoge Spannung um. Diese wird als Korrekturspannung bezeichnet. Die am Ausgang des Digital/Analogwandlers **8** anliegende Korrekturspannung wird nun als Stellgröße verwendet. Sie wird dem Verstärker **2** zugeführt.

Die neue Spannung am Ausgang **19** der Ansteuerschaltung setzt sich nun aus Beschleunigungsspannung, Bezugspannung, Offsetspannung und Korrekturspannung zusammen, wobei die Korrekturspannung der Offsetspannung entgegenwirkt. Dieser Vorgang wird solange wiederholt bis Meßspannung und Referenzspannung den gleichen Wert haben. Vorteilhaft ist es, wenn die Frequenz des Zeittaktes dabei so niedrig gewählt wird, daß die Anordnung, die als Hochpaß wirkt, eine untere Grenzfrequenz (z.B.: untere Grenzfrequenz = 0,01 Hz) besitzt, die deutlich unterhalb des Nutzbandes der jeweiligen Anordnung liegt. D.h., daß der Ausgang der Ansteuerung immer auf einen festen Wert geregelt wird. Kurzzeitige Signale jedoch, die von einer Beschleunigung herrühren können ungehindert zum Ausgang gelangen. Bei Airbagauslösungen sind Frequenzen von 1 Hz - 500 Hz relevant.

In diesem Verfahren zur Ansteuerung ist weiterhin eine Initialisierung (Power On Reset) vorgesehen, um bei jedem Einschaltvorgang so schnell und so zuverlässig als möglich definierte Anfangsbedingungen zu schaffen. Beim Einschalten wird der Power On Reset **12** betätigt, und somit der Vorwärts/Rückwärtszähler **7** im Zählerbereich **15** auf einen festgelegten Zahlenwert gesetzt, in der Regel der Mittelwert, und es wird der Zeittaktgeber **16** für eine definierte Zeit auf eine höhere Frequenz z.B.: 10 kHz gesetzt.

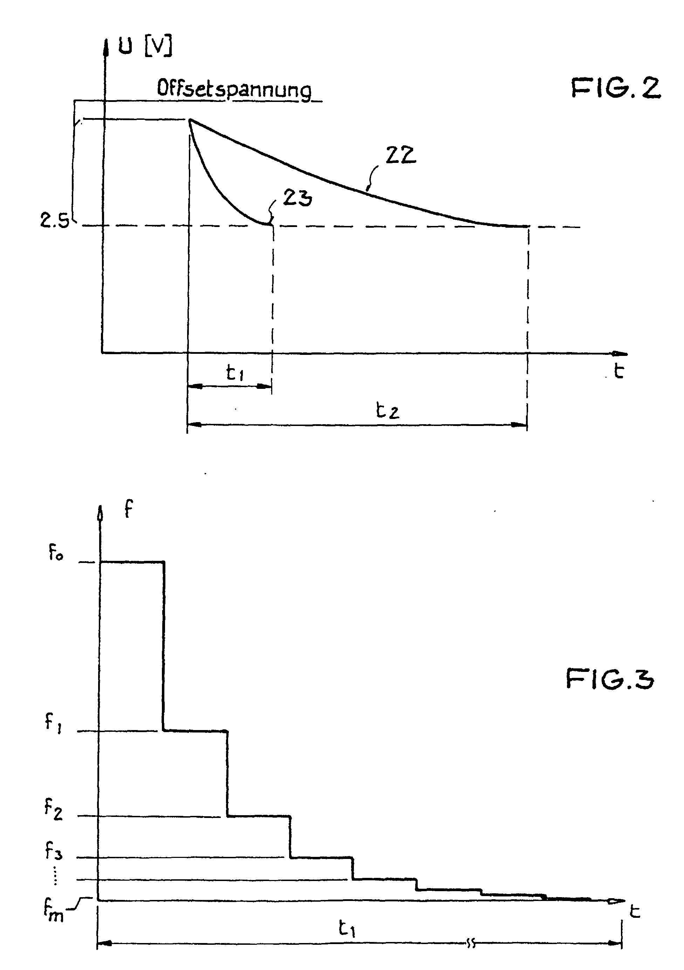

**Figur 2** zeigt wie dadurch ein beschleunigter Offsetregelvorgang, der Einschaltabweichungen rascher ausregelt, entsteht. Der Verlauf von Kurve **22** zeigt das herkömmliche Einschaltverhalten. Hier wird eine Zeit **t**_{**2**} benötigt bis die Offsetspannung **U**_{**Off**} vom System kompensiert wurde und das System mit der Bezugsspannung **U**_{**Bez**} z.B. U_{Bez} = 2,5V betriebsbereit ist. Kurve **23** zeigt den beschleunigten Verlauf **t**_{**1**} der durch das angegebene Ausführungsbeispiel erreicht wird. Das System ist wesentlich schneller betriebsbereit.

Während des Einschaltvorgangs wird wie in **Figur 3** dargestellt die Frequenz stufenweise bis zum eigentlichen Betriebsfrequenzbereich herabgeregelt. Dies geschieht mit Hilfe eines Schieberegisters **10,** der die Einschaltfrequenz am Anfang in m Schritten z.B. durch den Faktor 2 teilt. Diese Werte werden über eine m-bit Datenleitung an das frequenzerzeugende Bauteil weitergegeben. Die m verschiedenen Einschaltfrequenzen können durch einen zusätzlichen Oszillator **9** oder durch die Ansteuerung des ersten Oszillators **6** erzeugt werden. Hierbei legt die gewünschte untere Grenzfrequenz und die maximal zulässige Einschwingzeit die Anzahl der Schritte im Schieberegister **10** fest. Mit dieser Frequenzfolge wird dann wiederum der Zählerbereich **15** des Vorwärts/Rückwärtszählers **7** je nach Vorzeichen **13** um einen Wert herab oder hochgesetzt. Sofort nach dieser Einschwingzeit (z.B. 0,3s) ist das System betriebsbereit und kann jederzeit eine signifikante Änderung des Beschleunigungsaufnehmers **1** detektieren um dann die entsprechenden Sicherheitseinrichtungen zuverlässig auszulösen.

Die Sprünge von einer hohen Frequenz zur nächsten bis hin zur Betriebsfrequenz oder zum Betriebsfrequenzbereich sind nun nicht mehr so groß, so daß signifikante Beschleunigungsänderungen während des Einschwingvorgangs keine negativen Auswirkungen, in Form von sogenannten Offsetsprüngen, mehr zeigen.

Die Wirkungsweise des dargestellten Verfahrens zur Ansteuerung besteht darin, daß das Ausgangssignal nach der Signalverarbeitung **3** im Betriebszustand, also wenn kein Crashfall vorliegt durch die Offset-Kontroll-Einheit **11** auf einen definierten Ruhepegel geregelt werden kann.

## Patentansprüche

1. Verfahren zur Ansteuerung eines Sensors (1) mit Offsetregelung, bei der das Ausgangssignal (20) einer Ansteuerschaltung in einem Komparator (4) mit einer Referenzspannung (21) verglichen wird und dieser Vergleich mit einer festen oder variablen Betriebsfrequenz abläuft, **dadurch gekennzeichnet, daß**
- im Sensor (1) eine Sensorspannung erzeugt wird und
- am Ausgang der Ansteuerschaltung eine Meßspannung (20) abgegriffen wird, welche sich aus der Sensorspannung, einer Bezugspannung und einer Offsetspannung zusammensetzt und
- das Vorzeichen (13) und der Betrag (14) der Differenz zwischen der Meßspannung (20) am Ausgang der Ansteuerung und der Referenzspannung (21) erfaßt wird, wobei der Betrag (14) der Differenz die Betriebsfrequenz bestimmt und das Vorzeichen der Differenz (13) die Zählrichtung festlegt, d.h. das Vorzeichen der Stellgröße der Offsetregelung.

2. Verfahren zur Ansteuerung eines Sensors mit Offsetregelung, nach Patentanspruch 1, **dadurch gekennzeichnet, daß** die Sensorspannung von einem piezoresistiven Beschleunigungsaufnehmer erzeugt wird.

3. Verfahren zur Ansteuerung eines Sensors mit Offsetregelung, nach Patentanspruch 1, **dadurch gekennzeichnet, daß**
- der Betrag (14) der Differenz als Eingangsgröße für einen Oszillator (4) verwendet wird, der in Abhängigkeit von diesem Betrag ein Signal erzeugt und
- mit diesem Signal die Taktfrequenz eines Vorwärts/Rückwärtszähler (7) gesteuert wird.

4. Verfahren zur Ansteuerung eines Sensors mit Offsetregelung nach Patentanspruch 3, **dadurch gekennzeichnet, daß**
- mit dem Vorzeichen (13) der Differenz die Zählrichtung des Vorwärts/Rückwärtszähler (7) gesteuert wird.

5. Verfahren zur Ansteuerung eines Sensors mit Offsetregelung nach Patentanspruch 4, **dadurch gekennzeichnet, daß**
- das digitale Ausgangssignal des Vorwärts/Rückwärtszählers (7) in einen Digital/Analogwandler (8) geleitet wird und dort in ein analoges Signal umgewandelt wird und
- das analoge Signal einer Verstärkeranordnung (2) zugeführt wird.

6. Verfahren zur Ansteuerung eines Sensors mit Offsetregelung nach Patentanspruch 5, **dadurch gekennzeichnet, daß**
- in der Verstärkeranordnung (2) das Signal aus dem Analog/Digitalwandler (8) mit der Offsetspannung überlagert wird und
- der Abweichung von Meßspannung (20) und Referenzspannung (21) durch das Signal aus dem Analog/Digitalwandler (8) entgegengewirkt wird.

7. Verfahren zur Ansteuerung eines Sensors mit Offsetregelung nach Patentanspruch 6, **dadurch gekennzeichnet, daß** diese Regelung so oft wiederholt wird bis im betriebsbereiten Zustand eine Übereinstimmung der Meßspannung (20) und der Referenzspannung (21) erreicht ist.

8. Verfahren zur Ansteuerung eines Sensors mit Offsetregelung nach Patentanspruch 1, **dadurch gekennzeichnet, daß**
- beim Einschaltvorgang der Vergleich zwischen Ausgangssignal und Referenzspannung im Komparator mit einer Einschaltfrequenz betrieben wird, die eine höheren Frequenz als die Betriebsfrequenz aufweist und
- während des Einschaltvorganges diese Einschaltfrequenz stufenweise verkleinert wird bis die Betriebsfrequenz erreicht wird.

9. Verfahren zur Ansteuerung eines Sensors mit Offsetregelung nach Patentanspruch 8, **dadurch gekennzeichnet, daß** die Abstufungen durch ein Schieberegister (10) und einen Zeittaktgeber (9, 6) erzeugt werden.

## Claims

1. Process for controlling a sensor (1) with offset control in which the output signal (20) of a control circuit is compared in a comparator (4) with a reference voltage (21) and this comparison proceeds with fixed or variable operating frequency, **characterised in that**
- in the sensor (1) a sensor voltage is generated, and
- at the output from the control circuit a measurement voltage (20) is detected which is composed of the sensor voltage, a reference voltage and an offset voltage, and
- the sign (13) and the amount (14) of the difference between the measurement voltage (20) at the output of the control unit and the reference voltage (21) are detected, whereby the amount (14) of the difference determines the operating frequency and the sign of the difference (13) establishes the counting direction i.e. the sign for the adjustment variable of the offset control.

2. Process for controlling a sensor with offset control according to claim 1, **characterised in that** the sensor voltage is generated by a piezo-resistive acceleration sensor.

3. Process for controlling a sensor with offset control according to claim 1, **characterised in that**
- the amount (14) of the difference is used as an input parameter for an oscillator (4) which generates a signal as a function of this amount, and
- this signal controls the cycle frequency of an up/down counter (7).

4. Process for controlling a sensor with offset control according to claim 3, **characterised in that**
- the sign (13) of the difference controls the counting direction of the up/down counter (7).

5. Process for controlling a sensor with offset control according to claim 4, **characterised in that**
- the digital output signal of the up/down counter (7) is passed through a digital/analog converter (8) and there converted into an analog signal, and
- the analog signal is passed to an amplifier arrangement (2).

6. Process for controlling a sensor with offset control according to claim 5, **characterised in that**
- in the amplifier arrangement (2) the signal from the analog/digital converter (8) is overlaid with the offset voltage, and
- the discrepancy between the measurement voltage (20) and reference voltage (21) is countered by the signal from the analog/digital converter (8).

7. Process for controlling a sensor with offset control according to claim 6, **characterised in that** this control is repeated until, in the condition ready for operation; a match is achieved between the measurement voltage (20) and the reference voltage (21).

8. Process for controlling a sensor with offset control according to claim 1, **characterised in that**
- in the switch-on process the comparison between the output signal and reference voltage in the comparator is performed at a switch-on frequency which is higher than the operating frequency, and
- during the switch-on process this switch-on frequency is reduced in steps until the operating frequency is reached.

9. Process for controlling a sensor with offset control according to claim 8, **characterised in that** the steps are generated by a shift register (10) and a time signal emitter (9, 6).

## Revendications

1. Procédé pour commander un capteur (1) avec régulation du décalage, selon lequel le signal de sortie (20) d'un circuit de commande est comparé, dans un comparateur (4), à une tension de référence (21) et cette comparaison est exécutée avec une fréquence de fonctionnement fixe ou variable, **caractérisé en ce que**
- une tension du capteur est produite dans le capteur (1), et
- sur la sortie du circuit de commande est prélevée une tension de mesure (20), qui se compose dans la tension du capteur, d'une tension de référence et d'une tension de décalage, et
- le signe (13) et la valeur absolue (14) de la différence entre la tension de mesure (20) présente à la sortie du circuit de commande et la tension de référence (21) sont détectés, la valeur absolue (14) de la différence déterminant la fréquence de fonctionnement, et le signe de la différence (13) déterminant le sens de comptage, c'est-à-dire le signe de la grandeur de réglage du système de régulation de décalage.

2. Procédé pour la commande d'un capteur avec régulation de décalage, selon la revendication 1, **caractérisé en ce que** la tension du capteur est produite par un enregistreur piézoélectrique d'accélération.

3. Procédé pour la commande d'un capteur avec régulation de décalage selon la revendication 1, **caractérisé en ce que**
- la valeur absolue (14) de la différence est utilisée en tant que grandeur d'entrée pour un oscillateur (4), qui produit un signal en fonction de cette valeur absolue, et
- la fréquence de cadence d'un compteur progressif/régressif (7) est commandée avec ce signal.

4. Procédé pour la commande d'un capteur avec régulation de décalage selon la revendication 3, **caractérisé en ce que**
- le sens de comptage du compteur progressif/régressif (7) est commandé avec le signe (13) de la différence.

5. Procédé pour la commande d'un capteur avec régulation de décalage selon la revendication 4, **caractérisé en ce que**
- le signal de sortie numérique du compteur progressif/régressif (7) est envoyé à un convertisseur numérique/analogique (8) et est converti en un signal analogique, et
- le signal analogique est envoyé à un dispositif amplificateur (2).

6. Procédé pour la commande d'un capteur avec régulation de décalage selon la revendication 5, **caractérisé en ce que**
- dans le dispositif amplificateur (2), la tension de décalage est superposée au signal délivré par le convertisseur analogique/numérique (8), et
- le signal délivré par le convertisseur analogique/numérique (8) s'oppose à l'écart entre la tension de mesure (20) et la tension de référence (21).

7. Procédé pour la commande d'un capteur avec régulation de décalage selon la revendication 6, **caractérisé en ce que** cette régulation est répétée jusqu'à ce que, dans l'état prêt à fonctionner, une concordance soit atteinte entre la tension de mesure (20) et la tension de référence (21).

8. Procédé pour la commande d'un capteur avec régulation de décalage selon la revendication 1, **caractérisé en ce que**
- lors de l'opération de déclenchement de la comparaison entre le signal de sortie et la tension de référence dans le comparateur, le fonctionnement s'effectue avec une fréquence de déclenchement, qui est supérieure à la fréquence de fonctionnement, et
- pendant l'opération de déclenchement, cette fréquence de déclenchement est réduite d'une manière étagée jusqu'à ce que la fréquence de fonctionnement soit atteinte.

9. Procédé pour la commande d'un capteur avec régulation de décalage selon la revendication 8, **caractérisé en ce que** les étagements sont produits par un registre à décalage (10) et par un générateur de cadence (9,6).
